# EUROPÄISCHE PATENTSCHRIFT

(11) **EP 2 931 429 B1**
(45) Veröffentlichungstag und Bekanntmachung des Hinweises auf die Patenterteilung: **30.08.2023**
(21) Anmeldenummer: 13836251.2
(22) Anmeldetag: 05.12.2013
(51) Int. Cl.: B01L 3/00, B29C 65/48, B29C 65/54, B29C 65/00, B29L 31/00

(54) **VERFAHREN ZUR VERBINDUNG VON KOMPONENTEN EINER MIKROFLUIDISCHEN FLUSSZELLE**
METHOD FOR CONNECTING COMPONENTS OF A MICROFLUIDIC FLOW CELL
PROCÉDÉ D'ASSEMBLAGE DE COMPOSANTS D'UNE CUVE À CIRCULATION MICROFLUIDIQUE

(30) Priorität: 14.12.2012 DE 102012112306
(43) Veröffentlichungstag der Anmeldung: 21.10.2015
(73) Patentinhaber: thinXXS Microtechnology GmbH, 66482 Zweibrücken (DE)
(72) Erfinder: WEBER, Lutz, 66482 Zweibrücken (DE)
(74) Vertreter: Patentanwälte Bernhardt / Wolff Partnerschaft mbB
(86) Internationale Anmeldenummer: PCT/DE2013/100408
(87) Internationale Veröffentlichungsnummer: WO 2014/090225

(56) Entgegenhaltungen:
- EP-A1- 0 711 650
- EP-A1- 2 336 785
- WO-A1-2012/004296
- DE-A1- 19 922 075
- US-A1- 2007 141 805
- US-B1- 7 001 572
- CHIA-WEN TSAO ET AL: "Bonding of thermoplastic polymer microfluidics", MICROFLUIDICS AND NANOFLUIDICS, SPRINGER, BERLIN, DE, Bd. 6, Nr. 1, 13. November 2008 (2008-11-13), Seiten 1-16, XP019667827, ISSN: 1613-4990

## Beschreibung

Die Erfindung betrifft gemäß Oberbegriff des Anspruchs 1 ein Verfahren zur Verbindung von Komponenten einer mikrofluidischen Flusszelle, insbesondere zur Einbindung von Bauteilen in eine Trägerstruktur der Flusszelle, wobei zwischen den zu verbindenden Komponenten ein Spaltraum mit einem die Spalttiefe begrenzenden Spaltboden gebildet wird.

Die Erfindung betrifft ferner eine nach dem erfindungsgemäßen Verfahren hergestellte Flusszelle gemäß Anspruch 5.

Hauptanwendungsgebiet für das in Betracht stehende Verfahren ist die Herstellung von Flusszellen, wie sie z.B. in der medizinischen Analytik und Diagnostik, der Biochemie und der Molekularbiologie sowie der Medikamentenentwicklung zum Einsatz kommen und die eine Trägerstruktur aus Kunststoff aufweisen, in die Funktionsbauteile, insbesondere Sensoren aus Silizium, Glas oder Metall eingebunden sind. Derartige Flusszellen unterliegen einem Trend zu fortschreitender Miniaturisierung und zunehmender Komplexität ihrer Funktionen, so dass solche Flusszellen inzwischen als lab-on-chip bezeichnet werden.

Bei der Herstellung solcher miniaturisierten Flusszellen müssen Funktionsstrukturen mit Abmessungen von wenigen 10 µm bis zu einigen 100 µm erzeugt werden. In diesen Funktionsstrukturen spielen Oberflächeneigenschaften eine dominante Rolle, z.B. im Hinblick auf die kapillare Befüllung von Kanälen und Probenkammern. Ferner sind Montagetechniken erforderlich, die ein flüssigkeitsdichtes und druckstabiles Verschließen von Mikrokammern und Kanälen und insbesondere die Bildung geschlossener mikrofluidischer Netzwerke erlauben. Solche Flusszellen kostengünstig in großen Stückzahlen zu produzieren, um sie beispielsweise in der medizinischen Diagnostik einsetzen zu können, erfordert hohen Aufwand.

Zur Herstellung solcher Flusszellen werden zum einen Verfahren der Halbleitertechnik eingesetzt, insbesondere zur Mikrostrukturierung von Glas- oder Siliziumsubstraten. Vor allem bei der Herstellung komplexer Flusszellen ergeben sich dabei hohe Materialkosten. Eine zweite verwendete Produktionstechnik basiert auf Replikationsverfahren, z.B. Spritzgieß- oder Prägeverfahren. Hierdurch lassen sich kostengünstig Substrate aus Kunststoff, wie z.B. aus PMMA, PC, PP oder COC herstellen, deren Oberflächen mittels Plasmabeschichtung oder nasschemischer Verfahren modifiziert oder/und funktionalisiert werden können. Zur Montage solcher Substrate lassen sich Klebeverfahren, aber auch Laserschweißverfahren einsetzen. Nachteilig sind die auf letztere Weise realisierbaren Aspektverhältnisse deutlich geringer als bei den Verfahren der Halbleitertechnik.

Aus der WO 2012/004296 A1 ist es bekannt, in Trägerstrukturen aus Kunststoff Mikrobauteile aus Glas oder Silizium mit Hilfe eines z.B. durch UV-Bestrahlung aushärtbaren Klebermaterials einzubinden. Nachteilig kommt so zu dem Kunststoffmaterial der Trägerstruktur und dem Material des darin eingebundenen Mikrobauteils als drittes das Klebermaterial hinzu, welches in direkten Kontakt mit zu untersuchenden Fluiden kommt. Als Folge können Fehlmessungen auftreten. Nicht auszuschließen sind auch toxische Wirkungen auf biologisches Probenmaterial. Ein weiterer Nachteil besteht darin, dass solche Klebermaterialien eine vergleichsweise hohe Viskosität und geringe Benetzbarkeit aufweisen, was dazu führt, dass ein solcher Kleber nicht von allein, d.h. nicht kapillar, einen Montagespalt ausfüllt und mit hohem Aufwand in den Montagespalt hineintransportiert werden muss. Die Aushärtung von in Montagespalte eingefüllten Klebermaterialien, z.B. durch UV-Bestrahlung, ist langwierig und birgt Fertigungsunsicherheiten. Die geringe Benetzbarkeit erfordert große Spaltbreiten, welche wiederum die Genauigkeit der Positionierung der Mikrobauteile in der Trägerstruktur beeinträchtigen. Aushärtende UV-Strahlung kann sich nachteilig auf funktionalisierte Mikrobauteile auswirken und insbesondere immobilisierte Antikörper auf einer funktionalisierten Oberfläche eines Mikrobauteils zerstören. Gleiches gilt für die Aushärtung mittels Wärmeeinwirkung.

Aus den US 2007/141805 A1, EP 2 336 785 A1 sowie EP 0 711 650 A1 gehen Klebeverfahren hervor, bei denen Kunststoffteile, die mit einander angepassten Flächen durch ein Lösungsmittel verklebt werden, dass in Kapillarräume zwischen den Flächen eindringt.

Zur Herstellung solcher Flusszellen werden zum einen Verfahren der Halbleitertechnik eingesetzt, insbesondere zur Mikrostrukturierung von Glas- oder Siliziumsubstraten. Vor allem bei der Herstellung komplexer Flusszellen ergeben sich dabei hohe Materialkosten. Eine zweite verwendete Produktionstechnik basiert auf Replikationsverfahren, z.B. Spritzgieß- oder Prägeverfahren. Hierdurch lassen sich kostengünstig Substrate aus Kunststoff, wie z.B. aus PMMA, PC, PP oder COC herstellen, deren Oberflächen mittels Plasmabeschichtung oder nasschemischer Verfahren modifiziert oder/und funktionalisiert werden können. Zur Montage solcher Substrate lassen sich Klebeverfahren, aber auch Laserschweißverfahren einsetzen. Nachteilig sind die auf letztere Weise realisierbaren Aspektverhältnisse deutlich geringer als bei den Verfahren der Halbleitertechnik.

Aus der WO 2012/004296 A1 ist es bekannt, in Trägerstrukturen aus Kunststoff Mikrobauteile aus Glas oder Silizium mit Hilfe eines z.B. durch UV-Bestrahlung aushärtbaren Klebermaterials einzubinden. Nachteilig kommt so zu dem Kunststoffmaterial der Trägerstruktur und dem Material des darin eingebundenen Mikrobauteils als drittes das Klebermaterial hinzu, welches in direkten Kontakt mit zu untersuchenden Fluiden kommt. Als Folge können Fehlmessungen auftreten. Nicht auszuschließen sind auch toxische Wirkungen auf biologisches Probenmaterial. Ein weiterer Nachteil besteht darin, dass solche Klebermaterialien eine vergleichsweise hohe Viskosität und geringe Benetzbarkeit aufweisen, was dazu führt, dass ein solcher Kleber nicht von allein, d.h. nicht kapillar, einen Montagespalt ausfüllt und mit hohem Aufwand in den Montagespalt hineintransportiert werden muss. Die Aushärtung von in Montagespalte eingefüllten Klebermaterialien, z.B. durch UV-Bestrahlung, ist langwierig und birgt Fertigungsunsicherheiten. Die geringe Benetzbarkeit erfordert große Spaltbreiten, welche wiederum die Genauigkeit der Positionierung der Mikrobauteile in der Trägerstruktur beeinträchtigen. Aushärtende UV-Strahlung kann sich nachteilig auf funktionalisierte Mikrobauteile auswirken und insbesondere immobilisierte Antikörper auf einer funktionalisierten Oberfläche eines Mikrobauteils zerstören. Gleiches gilt für die Aushärtung mittels Wärmeeinwirkung.

Aus den US 2007/141805 A1, EP 2 336 785 A1 sowie EP 0 711 650 A1 gehen Klebeverfahren hervor, bei denen Kunststoffteile, die mit einander angepassten Flächen durch ein Lösungsmittel verklebt werden, dass in Kapillarräume zwischen den Flächen eindringt.

Ein Verfahren der eingangs erwähnten Art lässt sich der US 7 001 572 B1 sowie der WO 2012/004 296 A1 entnehmen. Zwischen miteinander zu verbindenden Bauteilen werden Spalträume gebildet, die durch ein Klebemittel ausgefüllt werden, wobei das Klebemittel dann aushärtet.

Der Erfindung liegt die Aufgabe zugrunde, ein neues Verfahren der eingangs erwähnten Art zu schaffen, das Verbindungen von Komponenten einer Flusszelle mit erhöhter Präzision und Fertigungssicherheit ermöglicht.

Diese Aufgabe wird mit den Merkmalen des Anspruchs 1 gelöst.

Das Verfahren nach der Erfindung ist dadurch gekennzeichnet, dass der Spaltraum mit einem Lösungsmittel gefüllt und durch das eingefüllte Lösungsmittel Material von wenigstens einer der den Spaltraum begrenzenden Komponenten gelöst wird, wobei sich das gelöste Material im Zuge einer Verdunstung des Lösungsmittels unter Herstellung einer Verbindung zwischen den Komponenten in Richtung zu dem Spaltboden absetzt und den Spaltraum in seiner Breite vollständig und in seiner Höhe teilweise auffüllt und dass zur sukzessiven Auffüllung des Spaltraums mehrere Einfüll- und Verdunstungs-/Absetzzyklen durchgeführt werden.

Vorteilhaft kann ein solches Lösungsmittel aufgrund seiner guten Benetzungseigenschaften schnell durch Kapillarwirkung in sehr enge Montagespalte eindringen, was eine hohe Präzision der gegenseitigen Positionierung der miteinander zu verbindenden Komponenten ermöglicht.

Zum Füllen größerer Spalte kann das in den Spaltraum eingefüllte Lösungsmittel von vornherein darin aufgelöstes Material zur Verbindung der Komponenten enthalten, welches mit dem Material von wenigstens einer der zu verbindenden Komponenten identisch ist. Dabei beträgt der Volumenanteil des Füllmaterials nur 0,1 bis 5% des Volumenanteils des Lösungsmittels, um dessen Fließfähigkeit nicht zu stark einzuschränken.

In jedem Fall wird der Montagespalt durch das nach Verdunsten des Lösungsmittels wieder verfestigte Material wenigstens teilweise aufgefüllt und so eine fluiddichte feste Verbindung zwischen den Komponenten hergestellt. Da das Material mit dem Material einer der Komponenten übereinstimmt, ergibt sich, insbesondere für amorphes Kunststoffmaterial eine praktisch einstückige Verbindung der Füllung mit dieser Komponente.

Das Material kann sich unter dem Einfluss der Schwerkraft absetzen, d.h. dass der Spaltraum in diesem Fall nach unten abgeschlossen sein muss. Alternativ oder zusätzlich könnte das Absetzen des Materials durch Trägheitskräfte gesteuert werden, insbesondere durch eine Zentrifugalkraft.

Das Auffüllen des Spaltraums mit sich absetzendem Material kann durch Einstellung der für die Verdunstung maßgebenden Temperatur beeinflusst werden. Zusätzlich oder alternativ ließe sich, z.B. bei Verwendung einer Zentrifuge, auch die Größe der für das Absetzen des Materials maßgebenden Kraft steuern.

Bei dem genannten, ggf. wenigstens eine der Komponenten bildenden Material handelt es sich vorzugsweise um einen amorphen Kunststoff, z.B. PMMA, PC, PS, COC oder COP.

In einer zweckmäßigen Ausführungsform der nach dem Verfahren hergestellten Flusszelle ist das Bauteil in einer Tasche der Trägerstruktur angeordnet und der Spaltraum als das Bauteil umgebender, zu einer axialen Seite hin offener Ringspalt ausgebildet.

Das Bauteil kann in der Tasche der Trägerstruktur gegen eine den Spaltraum auf dessen anderer axialen Seite abschließende Ringschulter oder einen Boden der Tasche anliegen.

Die Ringschulter ist in einer Ausführungsform durch eine mit der Trägerstruktur verbundene gelochte Folie gebildet.

In weiterer Ausgestaltung der Erfindung weist die Ringschulter oder der Taschenboden eine strukturierte Oberfläche derart auf, dass zwischen der Trägerstruktur und dem gegen die Ringschulter oder den Taschenboden anliegenden Bauteil ein den Spaltraum erweiternder Spaltraumbereich gebildet ist. Vorteilhaft lässt sich das Bauteil auf diese Weise auch im Bereich der Ringschulter mit der Trägerstruktur fluiddicht durch abgesetztes Material verbinden.

In weiterer vorteilhafter Ausgestaltung der Erfindung weist das Bauteil auf seiner der Ringschulter zugewandten Seite eine funktionalisierte Oberfläche auf. Durch die erfindungsgemäße Art der Verbindung wird diese, nahe bei der Verbindung gelegene Funktionalisierung nicht beeinträchtigt.

Eine der zu verbindenden Komponenten kann zusätzlich einen oder mehrere einseitig offene Kanalstrukturen oder/und Reservoirs aufweisen, welchen einen Ort zum Einbringen des Lösungsmittels mit dem ringförmigen Spalt verbinden oder als Überlaufraum dienen, um Lösungsmittel, welches das Volumen des zu füllenden Spaltes übersteigt, aufzunehmen. Auf diese Weise kann das Lösungsmittel mit vergleichsweise großen Dosiertoleranzen eingebracht werden.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein erstes Ausführungsbeispiel für eine nach dem erfindungsgemäßen Verbindungsverfahren hergestellte Flusszelle nach der Erfindung,
- Fig. 2: ein zweites Ausführungsbeispiel für eine Flusszelle nach der Erfindung mit einem erweiterten Verbindungsbereich,
- Fig. 3: ein drittes Ausführungsbeispiel für eine Flusszelle nach der Erfindung mit einem aus einer Kunststoffplatte und einer Folie gebildeten Trägerstruktur,
- Fig. 4: ein viertes Ausführungsbeispiel für eine Flusszelle nach der Erfindung, die gegenüber dem Ausführungsbeispiel von Fig. 3 zusätzlich elektrische Leiterbahnen aufweist,
- Fig. 5: ein fünftes Ausführungsbeispiel für eine Flusszelle nach der Erfindung mit Leiterbahnen und Leiterstiften, und
- Fig. 6 bis 10: weitere Ausführungsbeispiele für Flusszellen nach der Erfindung.

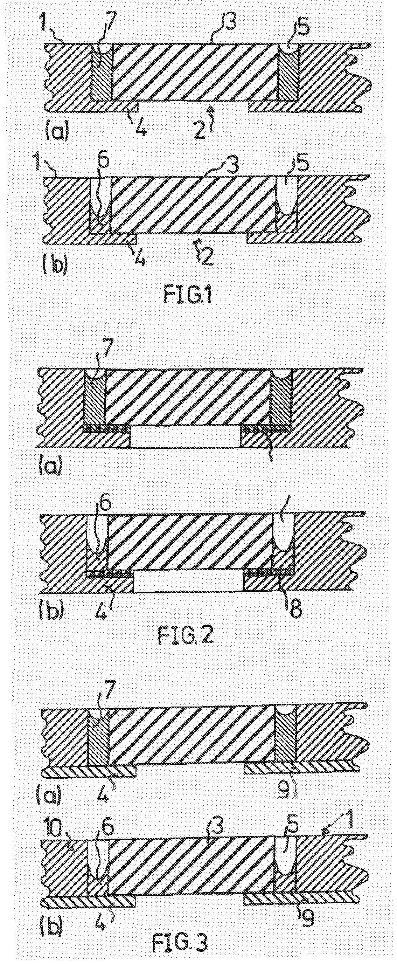

Eine in Fig. 1 ausschnittsweise dargestellte mikrofluidische Flusszelle umfasst eine plattenförmige Trägerstruktur 1, die vorzugsweise aus einem amorphen Kunststoff, wie z.B. PMMA, PC, PS, COC oder COP, besteht.

In einer Tasche 2 der Trägerstruktur 1 ist ein Mikrobauteil 3, in dem gezeigten Beispiel in der Grundform einer Kreisscheibe oder quadratischen Platte, angeordnet, die vorzugsweise aus Silizium hergestellt, aber z.B. auch aus Metall, Keramik, Kunststoff oder Glas gebildet und an ihrer Oberfläche auf verschiedene Weise funktionalisiert sein kann.

Das Mikrobauteil 3 liegt gegen eine Ringschulter 4 der ansonsten durch die Trägerstruktur 1 durchgehenden Tasche 2 an. Ein zwischen der Trägerstruktur 1 und dem Mikrobauteil 3 gebildeter Ringspalt 5 ist zu seiner einen axialen Seite hin offen und auf seiner anderen axialen Seite durch die Ringschulter 4 der Trägerstruktur 1 verschlossen. Die Spaltbreite 3 des Ringspalts 5 liegt typischerweise zwischen 0,01 und 0,1 mm.

Gemäß Fig. 1b ist der Ringspalt 5 teilweise mit Kunststoffmaterial 6 aufgefüllt. Das den Ringspalt 5 in seiner Breite überbrückende Kunststoffmaterial 6 stimmt mit dem Material überein, aus welchem die Trägerstruktur 1 besteht. Es hat sich während der Verdunstung eines gemäß Fig. 1a in den Ringspalt eingefüllten Lösungsmittels 7 unter Auffüllung des Ringspalts 5 abgesetzt.

Das Lösungsmittel 7 löst die Trägerstruktur 1 an, so dass es sich bei dem aus der verdunsteten Lösung abgesetzten Kunststoffmaterial 6 zumindest teilweise um von der Trägerstruktur 1 abgetragenes Material handelt. In dem in den Ringspalt 5 eingefüllten Lösungsmittel 7 kann jedoch von vornherein schon solches Material aufgelöst sein.

Je nach dem Kunststoff, aus welchem die Trägerstruktur besteht, können unterschiedliche Lösungsmittel zum Einsatz kommen, für PMMA-Kunststoff z.B. Aceton basiertes Lösungsmittel, für PC-Kunststoff Ethylacetat basiertes Lösungsmittel und für COC-Kunststoff Toluol basiertes Lösungsmittel. Die Kontaktwinkel zwischen solchen Lösungsmitteln und dem Kunststoffmaterial der Trägerstruktur liegen typisch unterhalb 10°, so dass sehr feine Spalte kapillar gefüllt werden können.

Das sich in dem Ringspalt 5 während der Verdunstung des Lösungsmittel 7 unter dem Einfluss der Schwerkraft absetzende Kunststoffmaterial 6 bildet eine den Ringspalt zwischen der Trägerstruktur 1 und dem Mikrobauteil 3 fluiddicht abschließende Brücke, durch die zwischen den genannten Komponenten auch eine mechanisch feste Verbindung hergestellt ist. Das sich absetzende amorphe Kunststoffmaterial bildet mit dem angrenzenden Kunststoff der Trägerstruktur praktisch eine einstückige Verbindung.

Erfindungsgemäß werden zur weiteren Auffüllung des Ringspalts 5 mit dem Kunststoffmaterial 6 weitere Einfüll- und Absetzzyklen durchgeführt.

Bei einem in Fig. 2 gezeigten Ausführungsbeispiel weist die Ringschulter 4 eine solche Oberflächenstruktur 8 auf, das ein abgewinkelter, den Ringspalt 5 fortsetzender Spaltbereich entsteht, in den das Lösungsmittel 7 eindringen und welcher durch wieder verfestigtes Kunststoffmaterial 6 gefüllt werden kann. An der Innenkante der Ringschulter 4 wird die kapillare Füllung des Ringspalts durch das Lösungsmittel aufgrund der abrupten Unterbrechung der Kapillarwirkung gestoppt, sodass kein Lösungsmittel außerhalb der Ringschulter 4 die Unterseite des Mikrobauteils benetzt. Eine fluiddichte Verbindung zwischen dem Mikrobauteil 3 und der Trägerstruktur 1 entsteht so auch im Bereich der Ringschulter 4. Eine zur Bildung einer solchen Spalterweiterung geeignete Oberflächenstruktur 8 kann eine definierte Rauhigkeit, Rillen, Stege oder/und lokale, z.B. zylinderförmige Erhebungen aufweisen, deren Stirnflächen dann die Auflagefläche für das Mikrobauteil bilden.

Bei einem in Fig. 3 gezeigten Ausführungsbeispiel ist die das Mikrobauteil 3 aufnehmende Ringschulter 4 durch eine gelochte Folie 9 gebildet. Die Folie 9 bildet zusammen mit einer Kunststoffplatte 10 die Trägerstruktur 1 und ist mit der Kunststoffplatte 10 verklebt oder verschweißt. Eine durch abgesetztes Kunststoffmaterial 6 hergestellte Verbindung zwischen dem Mikrobauteil 3 und der Kunststoffplatte 10 stabilisiert auch die unter Herstellung der Ringschulter 4 gelochte Folie 9. Durch die geringe Höhe der Folie 9 kommt es im Bereich der an die Folie 9 angrenzenden Oberfläche des Mikrobauteils 3 vorteilhaft nicht zu einem Totvolumen, das sich auf die Untersuchung eine an dem Mikrobauteil 3 vorbeiströmenden Fluids ggf. nachteilig auswirken könnten. Vorzugsweise liegt die Foliendicke zwischen 0,01 und 0,2 mm.

Für die Kunststoffplatte 10 der Trägerstruktur 1 kommen die weiter oben für die Trägerstruktur 1 genannten Materialien in Betracht.

Alternativ kann die Folie 9 lösbar mit dem Mikrobauteil 3 verbunden sein. Zur Verbindung eignen sich z.B. Klebefolien oder Tapes. Diese können nach Auffüllen des Ringspalts 5 durch das Kunststoffmaterial 6 wieder entfernt werden.

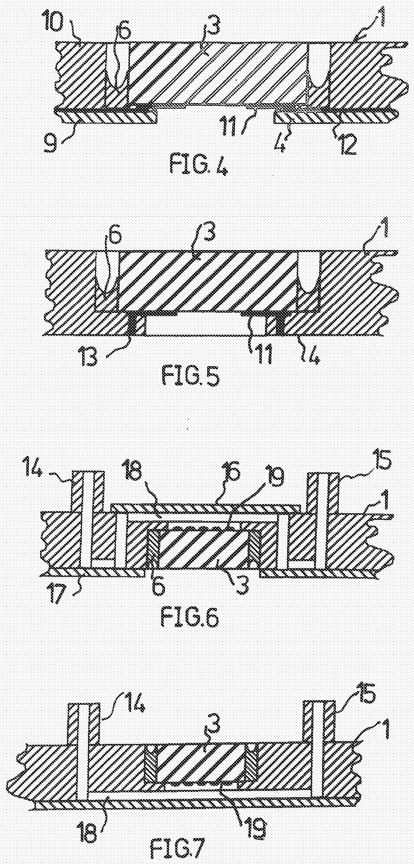

Ein in Fig. 4 gezeigtes Ausführungsbeispiel unterscheidet sich von dem vorangehenden Ausführungsbeispiel dadurch, dass das Mikrobauteil 3 mit Leiterbahnen 11 verbunden ist, die mit Leiterbahnen 12 in Kontakt stehen, welche zwischen der Folie 9 und der Kunststoffplatte 10 zugeführt werden. Die Breite der Leiterbahnen kann zwischen 0,01 und 1 mm liegen, ihre Höhe zwischen 0,01 und 10 µm. Mit der Einbindung des Mikrobauteils 3 in die Trägerstruktur 1 durch sich absetzendes Kunststoffmaterial 6 kommt es auch zur Stabilisierung und Fixierung der elektrischen Kontakte zwischen den Leiterbahnen 11 und 12.

Bei dem Ausführungsbeispiel von Fig. 5 ist die Ringschulter 4 wieder einstückig mit der übrigen Tragstruktur 1 ausgebildet und mit dem Mikrobauteil 3 verbundene Leiterbahnen 11 stehen elektrisch im Kontakt mit Leiterstiften 13, die sich senkrecht zu den Leiterbahnen 11 durch die Ringschulter 4 hindurch erstrecken. Die durch abgesetztes Kunststoffmaterial 6 hergestellte feste Verbindung zwischen dem Mikrobauteil 3 und der Tragstruktur 1 stabilisiert darüber hinaus den elektrischen Kontakt zwischen den Leiterbahnen 11 und Leiterstiften 13.

Gemäß Fig. 6 ist in der Tragstruktur 1 ein sich zwischen Anschlüssen 14,15 erstreckender, teilweise durch Folien 16 und 17 begrenzter Fluidkanal 18 gebildet. Der Fluidkanal 18 führt an einer funktionalisierten Oberfläche 19 des durch abgesetztes Kunststoffmaterial 6 in die Trägerstruktur 1 eingebundenen Mikrobauteils 3 vorbei.

Gemäß Fig. 7 ist die funktionalisierte Oberfläche 19 des Mikrobauteils 3, anders als in Fig. 6, von der die Anschlüsse 14,15 aufweisenden Seite der Tragstruktur 1 abgewandt angeordnet.

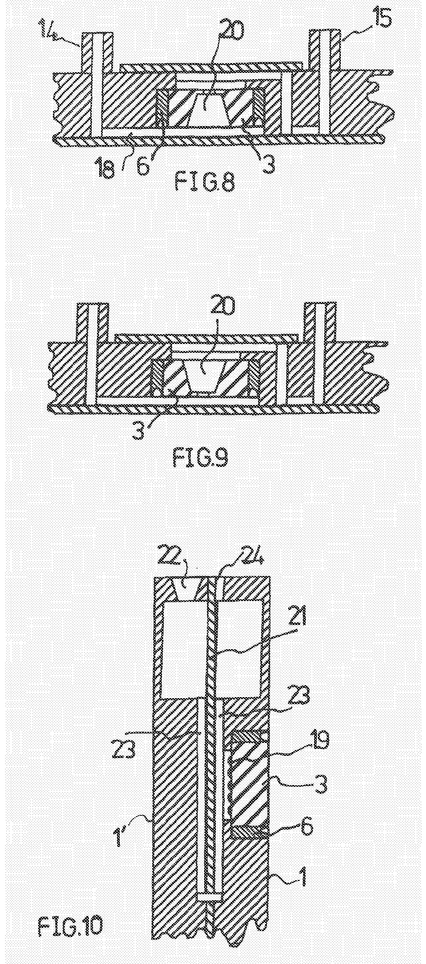

Gemäß Ausführungsbeispiel von Fig. 8 erstreckt sich ein Fluidkanal 18 durch einen Durchgang 20 des Mikrobauteils 3 hindurch, ebenso bei dem Ausführungsbeispiel von Fig. 9, wo das Mikrobauteil 3 zu Fig. 8 in umgekehrter Lage eingebaut ist.

Fig. 10 betrifft eine in der gezeigten vertikalen Stellung zu betreibende Flusszelle mit einer Tragstruktur 1 und einer weiteren Tragstruktur 1 ', die mit der Tragstruktur 1 über eine Folie 21 verbunden ist, z.B. mittels Kleben oder Schweißen. Ein Einlass 22 an der Tragstruktur 1' steht, ggf. über mehrere (nicht gezeigte) Fluidver- und Fluidbearbeitungsstationen, in Verbindung mit einem Kanal 23, der zu einem Mikrobauteil 3 mit einer funktionalisierten Oberfläche 19 führt. Durch den Einlass 22 eingefülltes Fluid steigt in dem Kanal 23 nach oben, wobei verdrängte Luft durch eine Entlüftungsöffnung 24 entweichen kann.

Durch den über das Mikrobauteil 3 hinaus ansteigenden Flüssigkeitsspiegel steht das durch abgesetztes Kunststoffmaterial 6 in die Trägerstruktur 1 eingebundene Mikrobauteil 3 unter erhöhtem Fluiddruck, so dass sich besonders hohe Anforderungen an die Dichtigkeit der Einbindung ergeben. Durch die erfindungsgemäße Art der Einbindung können diese Anforderungen erfüllt werden.

## Patentansprüche

1. Verfahren zur Verbindung von Komponenten einer mikrofluidischen Flusszelle, insbesondere zur Einbindung von Bauteilen (3) in eine Trägerstruktur (1) der Flusszelle, wobei zwischen den zu verbindenden Komponenten (1,3) ein Spaltraum (5) mit einem die Spalttiefe begrenzenden Spaltboden gebildet wird,
**dadurch gekennzeichnet,**
**dass** der Spaltraum (5) mit einem Lösungsmittel (7) gefüllt und durch das eingefüllte Lösungsmittel (7) Material (6) von wenigstens einer der den Spaltraum (5) begrenzenden Komponenten (1,3) gelöst wird, wobei sich das gelöste Material (6) im Zuge einer Verdunstung des Lösungsmittels (7) unter Herstellung einer Verbindung zwischen den Komponenten (1,3) in Richtung zu dem Spaltboden absetzt und den Spaltraum (5) in seiner Breite vollständig und in seiner Höhe teilweise ausfüllt, und dass zur sukzessiven Auffüllung des Spaltraums (5) mehrere Einfüll- und Verdunstungs-/Absetzzyklen durchgeführt werden.

2. Verfahren nach Anspruch 1,
**dadurch gekennzeichnet,**
**dass** das in den Spaltraum (5) eingefüllte Lösungsmittel (7) von vornherein darin aufgelöstes Material (6) zur Verbindung der Komponenten (1,3) zu einem geringen Anteil von 0,1 bis 5 Vol.% enthält.

3. Verfahren nach Anspruch 1 oder 2,
**dadurch gekennzeichnet,**
**dass** sich das Material (6) unter dem Einfluss der Schwerkraft oder/und einer Trägheitskraft, insbesondere Zentrifugalkraft, in Richtung zu dem Spaltboden absetzt.

4. Verfahren nach einem der Ansprüche 1 bis 3,
**dadurch gekennzeichnet,**
**dass** die Auffüllung des Spaltraums (5) mit sich absetzendem Material (6) durch Einstellung der für die Verdunstung maßgebenden Temperatur oder/und durch Einstellung der für das Absetzen maßgebenden Kraft gesteuert wird.

5. Mikrofluidische Flusszelle, die miteinander verbundene Komponenten, insbesondere ein in eine Trägerstruktur (1) eingebundenes Bauteil (3) umfasst, wobei zwischen den miteinander verbundenen Komponenten (1,3) ein Spaltraum (5) mit einem die Spalttiefe begrenzenden Spaltboden gebildet und in dem Spaltraum (5) ein die Komponenten (1,3) verbindendes Material (6) angeordnet ist,
**dadurch gekennzeichnet, dass** das die Komponenten verbindende Material (6) aus wenigstens einer der Komponenten (1,3) durch ein in den Spaltraum (5) gefülltes Lösungsmittel (7) herausgelöst und im Zuge einer Verdunstung des Lösungsmittels (7) unter sukzessiver Auffüllung des Spaltraum (5) in mehreren Einfüll- und Verdunstungs-/Absetzzyklen auf dem Spaltboden abgesetzt ist.

6. Flusszelle nach Anspruch 5,
**dadurch gekennzeichnet,**
**dass** das Material ein amorpher Kunststoff ist, z.B. PMMA, PC, PS, COC oder COP, ist.

7. Flusszelle nach Anspruch 5 oder 6,
**dadurch gekennzeichnet,**
**dass** das Bauteil (3) in einer Tasche (2) der Trägerstruktur (1) angeordnet und der Spaltraum als das Bauteil (3) umgebender, zu einer axialen Seite hin offener Ringspalt (5) ausgebildet ist.

8. Flusszelle nach einem der Ansprüche 5 bis 7,
**dadurch gekennzeichnet,**
**dass** das Bauteil (3) in einer Tasche (2) der Trägerstruktur (1) gegen eine den Spaltraum (5) auf dessen einer axialen Seite abschließende Ringschulter (4) oder einen Taschenboden anliegt.

9. Flusszelle nach Anspruch 8,
**dadurch gekennzeichnet,**
**dass** die Ringschulter (4) durch eine mit der Trägerstruktur (1) verbundene gelochte Folie (9) gebildet ist.

10. Flusszelle nach Anspruch 8 oder 9,
**dadurch gekennzeichnet,**
**dass** die Ringschulter (4) oder der Taschenboden eine strukturierte Oberfläche (8) derart aufweist, dass zwischen der Trägerstruktur (1) und dem gegen die Ringschulter (4) oder den Taschenboden anliegenden Bauteil (3) ein weiterer, mit dem Spaltraum (5) verbundener Spaltraumbereich gebildet ist.

11. Flusszelle nach einem der Ansprüche 8 bis 10,
**dadurch gekennzeichnet,**
**dass** das Bauteil (3) auf seiner der Ringschulter (4) zugewandten Seite eine funktionalisierte Oberfläche (19) aufweist.

12. Flusszelle nach einem der Ansprüche 5 bis 11,
**dadurch gekennzeichnet,**
**dass** das Bauteil (3) auf seiner der Ringschulter (4) zugewandten Seite Leiterbahnen (11) aufweist.

13. Flusszelle nach Anspruch 12,
**dadurch gekennzeichnet,**
**dass** die Leiterbahnen (11) im Kontakt mit dem Bauteil (3) zugeführten, mit der Trägerstruktur verbundenen Leiterbahn (12) stehen.

## Claims

1. Method for connecting components of a microfluidic flow cell, in particular for incorporating parts (3) into a carrier structure (1) of the flow cell, wherein a gap space (5) with a gap bottom delimiting the gap depth is formed between the components (1, 3) that are to be connected,
**characterized in that**
the gap space (5) is filled with a solvent (7) and material (6) from at least one of the components (1, 3) delimiting the gap space (5) is dissolved by the introduced solvent (7), wherein, as the solvent (7) evaporates, the dissolved material (6) settles as deposit towards the gap bottom with establishment of a connection between the components (1, 3) and fills the gap space (5) over all of its width and some of its height, and **in that**, to successively fill the gap space (5), multiple introduction and evaporation/deposition cycles are performed.

2. Method according to Claim 1,
**characterized in that**
the solvent (7) introduced in the gap space (5) contains a small amount of 0.1 to 5% by volume of material (6) dissolved therein at the outset for connecting the components (1, 3).

3. Method according to Claim 1 or 2,
**characterized in that**
the material (6) settles as deposit towards the gap bottom under the influence of gravitational force or/and a force of inertia, in particular centrifugal force.

4. Method according to one of Claims 1 to 3,
**characterized in that**
the filling of the gap space (5) with material (6) settling as deposit is controlled by setting the temperature definitive for the evaporation or/and by setting the force definitive for the deposition.

5. Microfluidic flow cell which comprises interconnected components, in particular a part (3) incorporated in a carrier structure (1), wherein a gap space (5) with a gap bottom delimiting the gap depth is formed between the interconnected components (1, 3) and material (6) connecting the components (1, 3) is disposed in the gap space (5),
**characterized in that**
the material (6) connecting the components is dissolved from at least one of the components (1, 3) by a solvent (7) introduced in the gap space (5), and, as the solvent (7) evaporates, is deposited on the gap bottom with successive filling of the gap space (5) in multiple introduction and evaporation/deposition cycles.

6. Flow cell according to Claim 5,
**characterized in that**
the material is an amorphous plastic, for example PMMA, PC, PS, COC or COP.

7. Flow cell according to Claim 5 or 6,
**characterized in that**
the part (3) is disposed in a pocket (2) of the carrier structure (1) and the gap space is in the form of an annular gap (5) which surrounds the part (3) and is open towards an axial side.

8. Flow cell according to one of Claims 5 to 7,
**characterized in that**
the part (3) in a pocket (2) of the carrier structure (1) bears against an annular shoulder (4), which terminates the gap space (5) on its one axial side, or a pocket bottom.

9. Flow cell according to Claim 8,
**characterized in that**
the annular shoulder (4) is formed by a perforated film (9) connected to the carrier structure (1).

10. Flow cell according to Claim 8 or 9,
**characterized in that**
the annular shoulder (4) or the pocket bottom comprises a structured surface (8) such that a further gap space region connected to the gap space (5) is formed between the carrier structure (1) and the part (3) that bears against the annular shoulder (4) or the pocket bottom.

11. Flow cell according to one of Claims 8 to 10,
**characterized in that**
the part (3) comprises a functionalized surface (19) on its side that faces towards the annular shoulder (4).

12. Flow cell according to one of Claims 5 to 11,
**characterized in that**
the part (3) comprises conductors (11) on its side that faces towards the annular shoulder (4).

13. Flow cell according to Claim 12,
**characterized in that**
the conductors (11) are in contact with conductors (12) which lead to the part (3) and are connected to the carrier structure.

## Revendications

1. Procédé pour relier des composants d'une cellule d'écoulement microfluidique, en particulier pour intégrer des éléments constitutifs (3) dans une structure de support (1) de la cellule d'écoulement, un espace interstitiel (5) étant formé entre les composants (1, 3) à relier, espace qui présente un fond d'interstice délimitant une profondeur d'interstice,
**caractérisé en ce que**
l'espace interstitiel (5) est rempli d'un solvant (7), et du matériau (6) est dissous par le solvant (7) versé à partir de l'un au moins des composants (1, 3) délimitant l'espace interstitiel (5), et le matériau dissous (6) se dépose vers le fond d'interstice au cours d'une évaporation du solvant (7) en établissant une liaison entre les composants (1, 3), et remplit l'espace interstitiel (5) entièrement dans sa largeur et partiellement dans sa hauteur, et
**en ce que** plusieurs cycles de remplissage et d'évaporation/dépose sont réalisés pour remplir successivement l'espace interstitiel (5).

2. Procédé selon la revendication 1,
**caractérisé en ce que**
le solvant (7) versé dans l'espace interstitiel (5) contient d'emblée du matériau (6) qui y est dissous, en une faible proportion de 0,1 à 5 % en volume, pour relier les composants (1, 3).

3. Procédé selon la revendication 1 ou 2,
**caractérisé en ce que**
le matériau (6) se dépose vers le fond d'interstice sous l'influence de la gravité ou/et d'une force d'inertie, en particulier d'une force centrifuge.

4. Procédé selon l'une des revendications 1 à 3,
**caractérisé en ce que**
le remplissage de l'espace interstitiel (5) par le matériau (6) qui se dépose est commandé par réglage de la température déterminante pour l'évaporation ou/et par réglage de la force déterminante pour la dépose.

5. Cellule d'écoulement microfluidique comprenant des composants reliés entre eux, en particulier un élément constitutif (3) intégré dans une structure de support (1), un espace interstitiel (5) étant formé entre les composants (1, 3) reliés entre eux, espace qui présente un fond d'interstice délimitant la profondeur de l'interstice, et un matériau (6) reliant les composants (1, 3) est disposé dans l'espace interstitiel (5),
**caractérisée en ce que**
le matériau (6) reliant les composants est dissous à partir de l'un au moins des composants (1, 3) par un solvant (7) versé dans l'espace interstitiel (5) et est déposé sur le fond d'interstice, au cours d'une évaporation du solvant (7), en plusieurs cycles de remplissage et d'évaporation/dépose avec remplissage successif de l'espace interstitiel (5).

6. Cellule d'écoulement selon la revendication 5,
**caractérisée en ce que**
le matériau est une matière plastique amorphe, par exemple PMMA, PC, PS, COC ou COP.

7. Cellule d'écoulement selon la revendication 5 ou 6,
**caractérisée en ce que**
l'élément constitutif (3) est disposé dans une poche (2) de la structure de support (1), et l'espace interstitiel est réalisé sous forme d'interstice annulaire (5) entourant l'élément constitutif (3) et ouvert vers un côté axial.

8. Cellule d'écoulement selon l'une des revendications 5 à 7,
**caractérisée en ce que**
l'élément constitutif (3) dans une poche (2) de la structure de support (1) est en appui contre un épaulement annulaire (4), fermant l'espace interstitiel (5) sur un côté axial de celui-ci, ou contre un fond de poche.

9. Cellule d'écoulement selon la revendication 8,
**caractérisée en ce que**
l'épaulement annulaire (4) est formé par une feuille perforée (9) reliée à la structure de support (1).

10. Cellule d'écoulement selon la revendication 8 ou 9,
**caractérisée en ce que**
l'épaulement annulaire (4) ou le fond de poche présente une surface structurée (8) de telle sorte qu'une autre zone d'espace interstitiel reliée à l'espace interstitiel (5) est formée entre la structure de support (1) et l'élément constitutif (3) en appui contre l'épaulement annulaire (4) ou contre le fond de poche.

11. Cellule d'écoulement selon l'une des revendications 8 à 10,
**caractérisée en ce que**
l'élément constitutif (3) présente une surface fonctionnalisée (19) sur son côté tourné vers l'épaulement annulaire (4).

12. Cellule d'écoulement selon l'une des revendications 5 à 11,
**caractérisée en ce que**
l'élément constitutif (3) présente des pistes conductrices (11) sur son côté tourné vers l'épaulement annulaire (4).

13. Cellule d'écoulement selon la revendication 12,
**caractérisée en ce que**
les pistes conductrices (11) sont en contact avec des pistes conductrices (12) amenées à l'élément constitutif (3) et reliées à la structure de support.
